# EUROPEAN PATENT APPLICATION

(11) **EP 4 105 880 A1**
(43) Date of publication of application: **21.12.2022**
(21) Application number: 21179965.5
(22) Date of filing: 17.06.2021
(51) Int. Cl.: G06T 7/00, G06K 9/00

(54) **AN X-RAY IMAGE ANALYSIS METHOD AND APPARATUS**

(71) Applicant: Koninklijke Philips N.V., 5656 AG Eindhoven (NL)
(72) Inventor: YAROSHENKO, Andriy, 5656 AE Eindhoven (NL); KOEHLER, Thomas, 5656 AE Eindhoven (NL)
(74) Representative: Philips Intellectual Property & Standards

(57) **Abstract**

Concepts for analyzing a phase-contrast X-ray image by identifying and classifying atypical pixels using a DAX value and attenuation value of each pixel of an image of the subject are proposed. In particular, atypical pixels can be identified by their ratio value, which is based on the DAX value and attenuation value. Such atypical pixels may then be further classified based on the DAX value and attenuation value. Using this concept, the diagnosis and quantification of regions of a subject exhibiting a disorder may be aided.

## Description

### FIELD OF THE INVENTION

The invention relates to the field of phase-contrast X-ray image analysis.

### BACKGROUND OF THE INVENTION

In conventional techniques of X-ray imaging, an object is exposed to X-rays to obtain a transmission image of the object. However, for soft tissues including vessels, cartilages, lungs, and breast tissues with little absorption, this provides poor attenuation contrast compared with bone images. In order to overcome this limitation, there have been major developments in recent years in phase-contrast X-ray imaging.

One of the primary differences between phase-contrast X-ray imaging and conventional X-ray imaging lies in the fact that, during conventional X-ray imaging, X-rays are treated as particles (meaning that only the number of photons reaching the detector is considered). In phase-contrast X-ray imaging, wave properties of the X-ray are also taken into account. Since a single, phase-contrast X-ray imaging system, regardless of its implementation, offers both phase-contrast (PC) and dark-field X-ray (DAX) information (in addition to attenuation/transmission X-ray information), in the context of the presently claimed invention the term phase-contrast X-ray imaging should be understood as covering both PC and DAX imaging.

DAX imaging has recently demonstrated an improved diagnostic accuracy for the diagnosing and staging of pulmonary disorders at an earlier stage compared to conventional X-ray imaging. For example, it has been demonstrated that DAX images can be used in order to precisely depict alveolar changes earlier than conventional attenuation-based X-ray imaging. This may prove particularly advantageous for the diagnosis of numerous pulmonary disorders, such as emphysema.

Further, phase-contrast computed tomorography (CT) (i.e. phase-contrast/dark-field CT) not only helps detect early stage disorders but reveals the information in 3D, which can be used for a precise evaluation and quantification of the disorder severity.

The acquisition of phase-contrast X-ray imaging typically relies on the introduction of a three-grating interferometer into the X-ray beam. Aternatively, coded appertures, or other approaches may be utilised. In either case, comparison of the interference pattern with and without the object in the X-ray beam allows to extract perfectly registered conventional X-ray attenuation, DAX, and phase-contrast signals. The perfect registration of the signals may enable signal combination, leading to increased diagnostic accuracy.

### SUMMARY OF THE INVENTION

The invention is defined by the claims.

According to examples in accordance with an aspect of the invention, there is provided a method of analyzing a phase-contrast X-ray image of a subject, the method comprising: receiving an image of the subject, the image comprising a plurality of pixels having a dark-field (DAX) value and an attenuation value; for each of the plurality of pixels, calculating a ratio value based on the DAX value and the attenuation value of the pixel; identifying atypical pixels of the plurality of pixels based on the calculated ratio values for the plurality of pixels; and classifying an atypical pixel based on the DAX value and the attenuation value of the atypical pixel.

In this way, proposed embodiments may provide a method of analyzing a DAX image, such that atypical pixels are identified and classfiied. By leveraging DAX values and attenuation values to acquire a ratio value (i.e. a relationship value) of all of the pixels, atypical pixels of the image may be determined. In other words, a measure of a relationship or ratio between a DAX value and an attentuation value may be identified for each pixel, such that atypical pixels may be ascertained. Atypical pixels may then be further classified, according to the DAX and attenuation values of the atypical pixels, thus providing more information of such pixels.

It is proposed that atypical pixels may be identified by the calculation of a relationship value for each pixel, and that the same data may be used to classify the pixels. In particular, it is proposed that the relationship value for a pixel is based on (i.e. takes account of) a ratio between the DAX value and the attenuation value of the pixel. For instance, the value determined for each pixel may be proportional to a ratio of the DAX value and the attenuation value of the pixel. Such classification of pixels may aid a user in identifying regions of interest, quantifying abnormalities, and ultimately help in a diagnostic process.

Proposed embodiments may leverage a realisation that the DAX value and attenutation value of a pixel may not only be used to identify whether the pixel is atypical, but may also be used to classify the pixel. Since both of these values are typically obtained in an acquisition, and they are usually perfectly registered, there may be no need to conduct additional imaging sessions in order to obtain the required information, thus potentially saving physician time and money.

In some embodiments, classifying the atypical pixel may be based on a comparison of the DAX value of the atypical pixel with a first predetermined range, and a comparison of the attenuation value of the atypical pixel with a second predetermined range.

In some embodiments, the first predetermined range may represent a range of typical DAX values, and the second predetermined range may represent a range of typical attenuation values.

In some embodiments, the atypical pixel may be classified into one of a plurality of classes.

In some embodiments, the method may further comprise classifying each of the atypical pixels, determining a number of atypical pixels belonging to each class; and communicating the number of atypical pixels belonging to each class to a user. By classifying each atypical pixel, the overall classification of all of the pixels of the acquisition may be determined. Therefore, a diagnostic process may be improved, as both areas of concern and an overall classification of the subject may be achieved.

In some embodiments, the image may be an image of lung parenchyma of the subject, and the plurality of classes may comprise at least one of an impaired ventilation class; a consolidation process class; an alveolar destruction class; an enhanced ventilation class; a possible consolidation process class; and a possible alveolar destruction class.

It is proposed that DAX imaging may be particularly effective for diagnosis of disorders in the lungs. Therefore, by obtaining an image of lung parenchyma, diagnosis of lung disorders may be aided by further classifying pixels of such an image. A number of classes have also been proposed.

In some embodiments, classifying the atypical pixel may comprise at least one of: classifying the atypical pixel in the class of impaired ventilation based on the DAX value being less than a lower-threshold of the first predetermined range, and the attenuation value being within the second predetermined range; classifying the atypical pixel in the class of a consolidation process based on the DAX value being less than the lower-threshold of the first predetermined range, and the attenuation value being greater than an upper-threshold of the second predetermined range; classifying the atypical pixel in the class of alveolar destruction based on the DAX value being less than the lower-threshold of the first predetermined range, and the attenuation value being less than a lower-threshold of the second predetermined range; classifying the atypical pixel in the class of enhanced ventilation based on the DAX value being greater than an upper-threshold of the first predetermined range, and the attenuation value being within the second predetermined range; classifying the atypical pixel in the class of possible consolidation process based on the DAX value being within the first predetermined range, and the attenuation value being greater than the upper-threshold of the second predetermined range; and classifying the atypical pixel in the class of possible alveolar destruction based on the DAX value being within the first predetermined range, and the attenuation value being less than the lower-threshold of the second predetermined range.

In some embodiments, for each of the plurality of pixels, calculating the ratio value may be based on dividing the DAX value by the attenuation value of the pixel.

In some embodiments, identifying atypical pixels of the plurality of pixels may be based on a comparison of the calculated ratio value of the pixel with a third predetermined range, and the third predetermined range represents a typical range of ratio values.

In some embodiments, an upper-threshold of the third predetermined range may be based on the upper-threshold of the first predetermined range divided by the lower-threshold of the second predetermined range, and a lower-threshold of the third predetermined range may be based on the lower-threshold of the first predetermined range divided by the upper-threshold of the second predetermined range.

In some embodiments, receiving the image of the subject may comprise receiving a DAX image of the subject; receiving an attenuation image of the subject; and determining the image of the subject based on the DAX image and the attenuation image.

A DAX image of the subject and attenuation image of the subject are separate images but may be perfectly registered due to the DAX imaging process. Therefore, pixels of both images may have pixels acquired from a same viewpoint and at a same time, and so it may be straightforward to determine an image having pixels with a DAX value, and an attenuation value.

In some embodiments, each of the plurality of pixels may further have a phase-contrast value and classifying the atypical pixel may be further based on the phase-contrast value of the atypical pixel. A phase-contrast image is typically acquired in the same acquisition as a DAX image and an attenuation image. Thus, it may typically require no additional effort to determine a plurality of phase-contrast values, which may be used to further classify atypical pixels.

In some embodiments, the DAX value of each pixel may be a scattering coefficient, and the attenuation value of each pixel may be a linear attenuation coefficient.

In some embodiments, the image may be a computed tomography (CT) image of the subject. By acquiring a CT image, a 3D region of interest may be imaged completely. As a result, atypical pixels in a whole region of interest of the subject may be identified and classified.

In another aspect of the invention, there is provided a computer program element, which, when being executed by at least one processing unit, is adapted to cause the processing unit to perform the steps of the method.

In another aspect there is provided a computer readable medium having stored the program element.

According to another aspect of the invention, there is provided an apparatus for analyzing a phase-contrastX-ray image of a subject, the apparatus comprising: a receiving unit configured to receive an image of the subject, the image comprising a plurality of pixels having a DAX value and an attenuation value; and a pixel classification unit configured to: for each of the plurality of pixels, calculate a ratio value based on the DAX value and the attenuation value of the pixel; identify atypical pixels of the plurality of pixels based on the calculated ratio values for the plurality of pixels; and classify an atypical pixel based on the DAX value and the attenuation value of the atypical pixel.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flow diagram of a method of analyzing a phase-contrast X-ray image according to an exemplary embodiment;
Fig. 2 is a flow diagram of a method of classifying an atypical pixel of lung perencyhna of a subject;
Fig. 3 is a flow diagram of a method of analyzing a DAX image according to another exemplary embodiment;
Fig. 4 is a flow diagram of a method of receiving an image of a subject; and
Fig. 5 is a block diagram representing an apparatus for analyzing a phase-contrast X-ray image of a subject according to another expemplary embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. If the term "adapted to" is used in the claims or description, it is noted the term "adapted to" is intended to be equivalent to the term "configured to".

It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to analyzing a phase-contrast X-ray image of a subject. For example, by identifying and classifying atypical pixels using dark-field (DAX) values and attenuation values of each pixel. According to proposed concepts, a number of possible solutions may be implemented separately or jointly. That is, although these possible solutions may be described below separately, two or more of these possible solutions may be implemented in one combination or another.

Embodiments of the invention aim to provide concepts for analyzing a DAX image of a subject, such that atypical pixels of the image may be identified and classified. In this way, such analysis may aid the diagnostic process by identifying areas of interest, while also classifying them. In other words, DAX values and attenuation values acquired during a typical DAX acquisition may be leveraged, to not only identify atypical pixels, but to also provide classifications of such pixels.

By way of explanation, in order to facilitate the use of DAX imaging in the clinical routine, it is typically necessary to provide to the physicians a comprehensive tool that helps to identify and quantify the disorders on images. This is particularly pertinent for tomographic images, as a large amount of information is provided to the physician, so a tool that aids in the analysis of such images may prove invaluable.

For instance, pulmonary diseases such as chronic obstructive pulmonary disease (COPD) are quantified on conventional computed tomography (CT) images using a pre-defined threshold. In many cases, all pixels with values, for example, below -950 HU for COPD are considered emphysematous. However, the result of this approach is strongly dependent on the inhalation state of the patient.

Further, this technique is used for other parts of the body. For example, DAX imaging may be used to identify differences between normal bone structure, bone structure exhibiting osteoporosis and edematous bone structure.

One approach, which may improve this method, could be to calculate the ratio of the DAX signal and the transmission signal for each pixel (ε/µ, where ε denotes the scattering coefficient and µ the linear attenuation coefficient). Still, since the DAX signal is not specific to the alveolar changes, this approach may lead to confusing results. By way of example, both emphysema and fibrosis lead to a signal decay in the DAX signal, reducing the signal to zero in extreme cases. Thus, for such pixels, it may not be possible to distinguish between different disorders, and quantification is has a high degree of uncertainty.

Put another way, DAX images of both emphysematous and fibrotic lungs typically exhibit large amounts of signal decay in the DAX signal compared to a DAX image of healthy lungs. Thus, it is often confusing to a physician aiming to diagnose such diseases using DAX images.

The invention aims to provide a more sophisticated method for diagnosis and quantification of diseases using DAX imaging. Specifically, proposed embodiments may employ a combination of a DAX signal and a conventional attenuation signal.

In particular, some embodiments provide a method that can quantify morphological changes in the lungs of subjects according to the following classes:
Impaired ventilation;
Consolidation process (consolidation, fibrosis, lesion formation, etc.)
Alveolar destruction (emphysema, etc.);
Enhanced ventilation;
Possible consolidation process;
Possible alveolar destruction;

It should be noted that the exact naming of the classes might change with more clinical data available. Indeed, these classes may indicate other conditions that are clinically related, such as impaired ventilation and lung atelectasis, or consolidation process and lung inflammation/ fibrotic changes.

Thus, some embodiments may help radiologists to detect abnormal regions in the lung and quantify these changes.

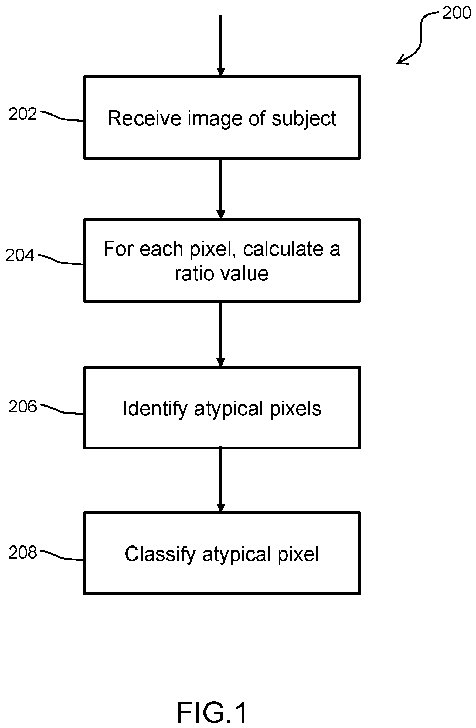

Turning now to Fig. 1, there is presented a flow diagram of an exemplary embodiment of a method 200 of analyzing a DAX image of a subject.

At step 202, an image of the subject is received. The image of the subject includes a plurality of pixels, and each pixel has a DAX value and an attenuation value. In some embodiments, the DAX value of each pixel is a scattering coefficient, and the attenuation value of each pixel is a linear attenuation coefficient.

It may be the case that the image comprises two images, namely a DAX image and an attenuation image. In this case, the DAX image and the attenuation image may be perfectly registered. In other words, pixels of the DAX image may map onto pixels of the attenuation image, as both images may be acquired from a same viewpoint, and at a same time.

The image may be obtained from a medical database, or alternatively it may be acquired directly from phase-contrast imaging the subject.

In some embodiments, the image of the subject may be an image of a region of interest of the subject. By way of example, the region of interest may be, a particular bone of the subject, lung parenchyma of the subject or another organ of the subject capable of being imaged using DAX imaging. In this case, an image of the subject may be acquired, and then the image may be segmented to only include the region of interest.

In yet further embodiments, the image may be a 2D image of the subject, or the image may be a CT image of the subject. In the case that the image is a 3D image of the subject, the whole of a region of interest of the subject may be imaged.

At step 204, a ratio value is calculated for each pixel. The ratio value for a pixel is based on the DAX value and the attenuation value of the pixel. It may be the case that the ratio value is based on dividing the DAX value by the attenuation value of the pixel. The ratio value may further be modified by a coefficient, with the coefficient depending on the quality of the image, or other parameters related to the image. Alternatively, a constant may be added to or subtracted from either the DAX value or the attenuation value before calculating a ratio value.

Put another way, step 204 relies on the calculation of the ratio of the dark-field and the attenuation signal. For example, ε/µ, where ε denotes the DAX value, which may be a scattering coefficient, and µ denotes the attenuation value, which may be a linear attenuation coefficient.

At step 206, atypical pixels of the plurality of pixels are identified based on the calculated ratio values for the plurality of pixels. In some embodiments, identifying atypical pixels of the plurality of pixels may be based on a comparison of the calculated ratio value of the pixel with a predetermined range. The predetermined range may represent a typical range of ratio values.

In particular, ratio values outside this typical range may indicate that the difference between the DAX value and attenuation value indicates areas of the subject that are abnormal. This typical range may depend on an area of interest of the subject, and factors related to the acquisition. The typical range may be a known range from literature or may be learnt from a machine-learning algorithm, trained on a number of images including typical and atypical pixels.

In other words, non-normal ratio values are determined. For example, a comparison may be performed between the ratio value, ε/µ, of the pixel and ε₀/µ₀, and ε₁/µ₁, where ε₀, µ₀, ε₁, µ₁ are predetermined lower and upper boundaries for the DAX value and attenuation value, respectively. These thresholds may be age-dependent or even system dependent; therefore, proper threshold adaptation and/or rescaling may be performed.

Finally, at step 208, an atypical pixel is classified based on the DAX value and the attenuation value of the atypical pixel. The invention aims to first identify, and then classify atypical pixels. Thus, both the value of the DAX value and the attenuation value individually, plus the difference between the two values, may be used to accurately classify pixels. Such a classification of pixels may help to diagnose parts of the subject's body, such as lungs, while also quantifying the amount of diseased tissue, bone, etc.

In some embodiments, classifying the atypical pixel is based on a comparison of the DAX value of the atypical pixel with a first predetermined range, and a comparison of the attenuation value of the atypical pixel with a second predetermined range. The first predetermined range may represent a range of typical DAX values, and the second predetermined range represents a range of typical attenuation values. Therefore, by a comparison of the DAX values and the attenuation values with predetermined ranges, classification of atypical pixels may be achieved.

In other words, it may be determined if both the DAX value and attenuation value, or only one of the values, of the pixel is outside the range of values that are considered to be normal.

The upper threshold of the first predetermined range ε₀, the lower threshold of the first predetermined range, ε₁, the upper threshold of the second predetermined range, µ₀, , and the lower threshold the second predetermined range, µ₁, may be age-dependent or even system dependent, therefore, proper threshold adaptation/rescaling may be performed. In some cases, the threshold may be known from literature. For example, a typical the lower threshold of the first predetermined range may be -950 HU in order to detect emphysematous tissue, but it is not restricted to being this value.

In this case, the typical range of ratio values (a third predetermined range) may be based on the first predetermined range, and the second predetermined range. Accordingly, an upper-threshold of the third predetermined range may be based on the upper-threshold of the first predetermined range divided by the lower-threshold of the second predetermined range, and a lower-threshold of the third predetermined range may be based on the lower-threshold of the first predetermined range divided by the upper-threshold of the second predetermined range.

Thus, the first predetermined range may be *ε*₀ < *ε* < *ε*₁, where *ε* is the DAX value of the pixel. The second predetermined range may be *µ*₀ < *µ* < *µ*₁, where *µ* is the attenuation value of the pixel. The third predetermined range may be *ε*₀/µ₁< r < *ε*₁/*µ*₀, where r is the ratio value of the pixel.

The classification may be into one of a plurality of classes. Since the DAX value of the pixel may be higher, lower or within the first predetermined range, and the attenuation value of the pixel may be higher, lower or within the second predetermined range, there may be up to 9 potential classifications for the pixel. If the third predetermined range is simply *ε*₀/*µ*₁< r < *ε*₁/*µ*₀, then there may be up to 8 classifications for the pixel, as if both the DAX value and the attenuation value are within the first and second predetermined ranges for this instance, the pixel will not be labelled as an atypical pixel.

In some embodiments, the plurality of pixels may further have a phase contrast value. A phase-contrast image is typically acquired at the same time as a DAX image and an attenuation image, and so may exhibit perfect registration with the DAX image and attenuation. Thus, obtaining phase-contrast values of the pixels would typically require not extra time, nor cost. In a case where the plurality of pixels each have a phase-contrast value, classifying the atypical pixel may be further based on the phase-contrast value of the atypical pixel.

Overall, embodiments of the method for analyzing a DAX image of the subject may provide an accurate and granular means to identify and classify atypical pixels. This information may be used to improve diagnosis of an area of interest of the subject.

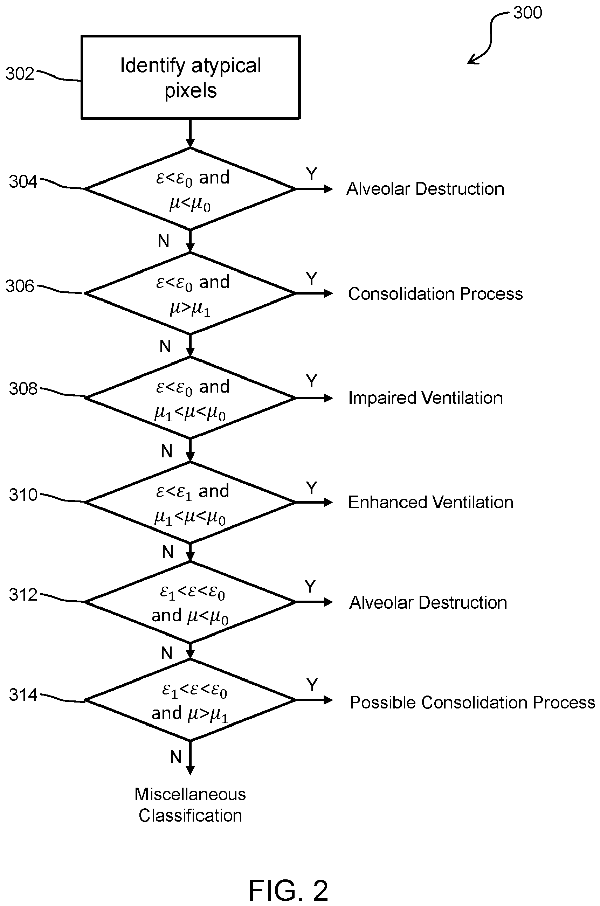

Fig. 2 presents a flow diagram of method 300 of classifying lung perencyhna of a subject accoridng to an aspect of an exemplary embodiment.

In some embodiments, the image is an image of lung parenchyma of the subject. In this case, the image may be obtained directly from the subject, or by segmentation of an image of a subject may be performed, leaving only an image including pixels related to lung parenchyma. In this case, identified atypical pixels may be grouped into a plurality of classes. The plurality of classes may include at least one of an impaired ventilation class, a consolidation process class, an alveolar destruction class, an enhanced ventilation class, a possible consolidation process class, and a possible alveolar destruction class.

Indeed, it should be noted that the exact naming of the classes might change, as more is understood about the interaction between a DAX signal, an attenuation signal, and diseased tissue. Of course, the above-identified classes may indicate other conditions that are clinically related. This may include impaired ventilation and lung atelectasis, or consolidation process and lung inflammation/ fibrotic changes. Once again, as more clinical data becomes available, more will be known about how a DAX value and an attenuation value may be used to diagnose specific diseases.

Turning to step 302 of Fig. 2, atypical pixels among the plurality of pixels are identified. Specifically, in this case, atypical lung parenchyma pixels are identified. The atypical pixels are then input to a classification process according to steps 304-314.

At step 304, the atypical pixel is classified in the class of alveolar destruction if the DAX value is less than the lower-threshold of the first predetermined range, and the attenuation value is less than a lower-threshold of the second predetermined range.

At step 306, the atypical pixel is classified in the class of a consolidation process if the DAX value is less than the lower-threshold of the first predetermined range, and the attenuation value is greater than an upper-threshold of the second predetermined range.

At step 308, the atypical pixel is classified in the class of impaired ventilation if the DAX value is less than a lower-threshold of the first predetermined range, and the attenuation value is within the second predetermined range.

At step 310, the atypical pixel is classified in the class of enhanced ventilation if the DAX value is greater than an upper-threshold of the first predetermined range, and the attenuation value is within the second predetermined range.

At step 312, the atypical pixel is classified in the class of possible alveolar destruction if the DAX value is within the first predetermined range, and the attenuation value is less than the lower-threshold of the second predetermined range.

At step 314, the atypical pixel is classified in the class of possible consolidation process if the DAX value is within the first predetermined range, and the attenuation value is greater than the upper-threshold of the second predetermined range.

If the DAX value is not within the first predetermined range, or the attenuation value is not greater than the upper-threshold of the second predetermined range, at step 314, then the atypical pixel may be given a miscellaneous classification. It may be the case that the atypical pixel is erroneous, or the atypical pixel may be attributed to a different disease or classification. This may be the case, for instance, if the DAX value is greater than the upper threshold of the first predetermined range, and the attenuation value is outside the second predetermined range (either grater than, or less than).

To paraphrase the above, the classification of an atypical pixel described in reference to Fig. 2 may be summarized by the following rules:
If the DAX value is less than the lower-threshold of the first predetermined range (ε₀ > ε) and the attenuation value is within the normal boundaries (µ₀ < µ < µ₁), the pixel can be considered to have impaired ventilation. Indeed, it may be preferable to avoid to attributing the atypical pixel to any specific disorder quantification, since this information is non-specific. Many different diseases may be attributable to impaired ventilation.

If the DAX value is less than the lower-threshold of the first predetermined range (ε₀ > ε) and the attenuation value is greater than the upper-threshold of the second predetermined range (µ > µ₁) then attribute this atypical pixel to a consolidation process, which includes fibrosis, consolidation, lesion, etc. A specific disease classification should be avoided, as the signal changes are not specific.

If the DAX value is less than the lower-threshold of the first predetermined range (ε₀ > ε) and the attenuation value is less than the lower-threshold of the second predetermined range (µ < µ₀), attribute the pixel to the class of alveolar destruction.

If the DAX value is greater than the upper-threshold of the first predetermined range (ε₁ < ε) and the attenuation value is within the normal boundaries (µ₀ < µ < µ₁), the atypical pixel should be considered as having better ventilation than normal.

If the DAX value is within the predefined boundaries (ε₀ < ε < ε₁), and the attenuation value is greater than the upper-threshold of the second predetermined range (µ > µ₁), then the pixel should be considered as possibly consolidating.

If the DAX value is within the predefined boundaries (ε₀ < ε < ε₁), and the attenuation value is less than the lower-threshold of the second predetermined range (µ < µ₀), then the pixel should be attributed to the class possible alveolar destruction.

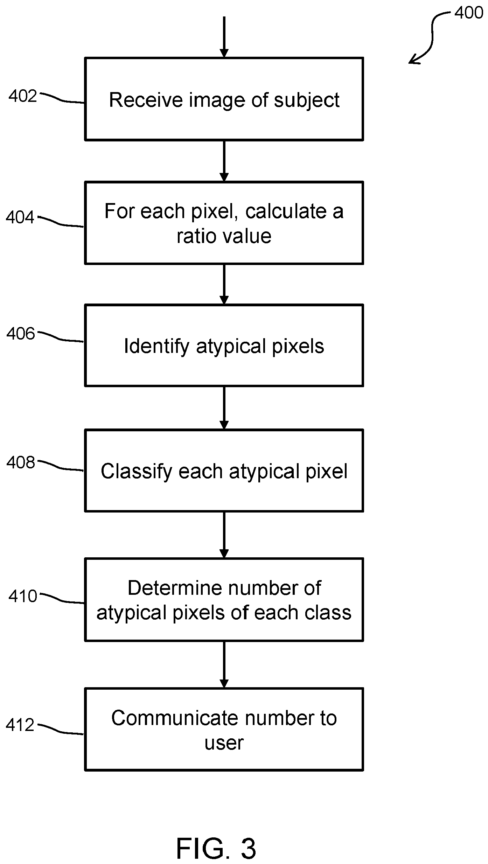

Turning now to Fig. 3, a flow diagram of another exemplary embodiment of a method 400 of analyzing a phase-contrast image is provided. Steps 402, 404 and 406 are equivalent to steps 202, 204 and 206 described in reference to Fig. 1, respectively. Therefore, repeated description here is omitted.

At step 408, similar to step 208 of Fig. 1, an atypical pixel is classified. However, in step 408, each of the atypical pixels of the image are classified in the same process as decribed in relation to step 208. In this way, all atypical pixels are attributed to a class.

At step 410, a number of atypical pixels belonging to each class is determined. Further, this may be compared to the number of pixels in the image overall in order to provide a percentage value of pixels of the image belonging to the class.

At step 412, the number of atypical pixels belonging to each class is communicated to a user. This number may be presented as a summary in the form of a table, a graph, or otherwise. In essence, the result of the analysis may be presented to the reader in any form, including the form of a table that summarizes how many pixels were attributed to what type of disorder through automatic quantification.

In the case that the image of the subject is of a region of interest of the subject including lung parenchyma, the number and/or volume of pixels with a certain impairment may be related to the total lung volume. The result may then appear the same as Table 1.

**Table 1: Communication of the number of atypical pixels belonging to a class to a user.**

| *Disorder* | *Percentage* |
|---|---|
| Impaired ventilation | 5% |
| Consolidation process | 0% |
| Alveolar destruction | 3% |
| Enhanced ventilation | 0% |
| Possible consolidation | 1% |
| Possible alveolar destruction | 0% |

It is worth noting that the exact naming of the classes may change as additional clinical data becomes available. However, the quantification rules may remain the same.

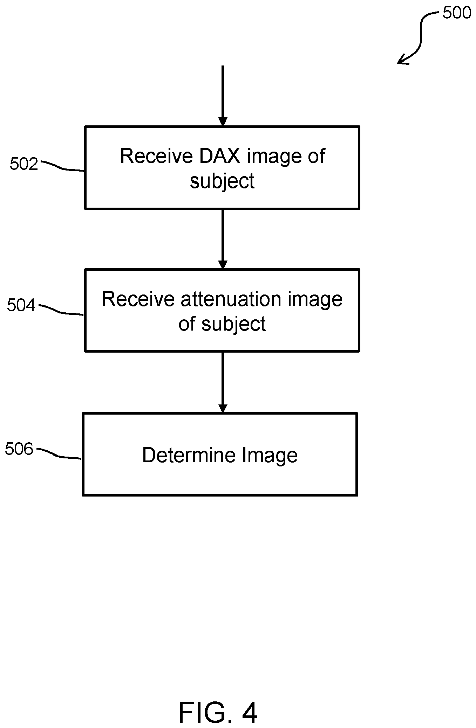

Fig. 4 depicts a flow diagram of method 500 of receiving an image of a subject accoridng to an aspect of an exemplary embodiment.

At step 502, a DAX image of the subject is received. The DAX image may comprise a plurality of DAX pixels, each having a DAX value. The DAX image may be obtained from memory or may be acquired directly from a scanning session.

At step 504, an attenuation image of the subject is received. The attenuation image may comprise a plurality of attenuation pixels, each having an attenuation value. The attenuation image may be obtained from memory or may be acquired directly from a scanning session. The scanning session may be the same scanning session as the phase-contrast session.

Indeed, the acquisition of phase-contrast images, including phase-contrast CT, typically requires a three-grating interferometer into the X-ray beam. Comparison of the interference pattern with and without the object in the X-ray beam allows to extract perfectly registered conventional X-ray attenuation, DAX, and phase-contrast signals. The perfect registration of the signals may enable signal combination, leading to increased diagnostic accuracy.

Thus, at step 506, the image of the subject may be determined based on the DAX image and the attenuation image. As the DAX image and attenuation image may be perfectly registered, there may be no issue in determining the image of the subject including a plurality of pixels having a DAX value and an attenuation value.

In another exemplary embodiment of the present invention, a computer program or a computer program element is provided, which when being executed by at least one processing unit, is adapted to cause the processing unit to perform the steps of the method of the preceding section.

According to a further exemplary embodiment of the present invention, a computer readable medium, such as a CD-ROM, is presented wherein the computer readable medium has a computer program element stored on it which computer program element is described by the preceding section.

A computer program may be stored/distributed on a suitable medium, such as an optical storage medium or a solid-state medium supplied together with or as part of other hardware, but may also be distributed in other forms, such as via the Internet or other wired or wireless telecommunication systems.

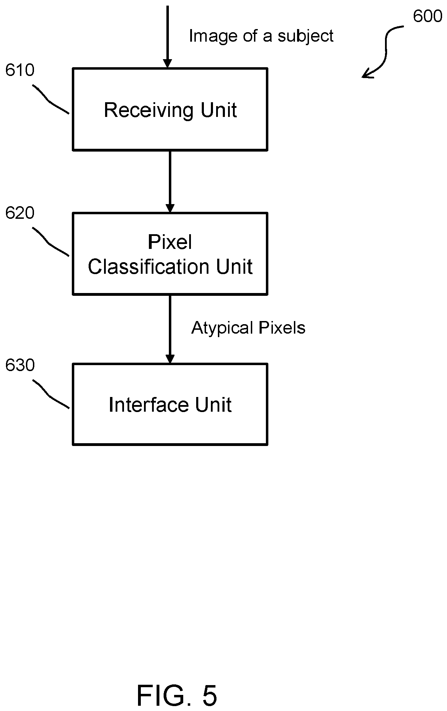

Fig. 5 shows a simplified block diagram 600 of an apparatus for analyzing a phase-contrast image of the subject. The apparatus depicted in Fig. 5 may be capable of performing any of the embodiments described above.

The apparatus comprises a receiving unit 610, and a pixel classification unit 620. Further, the system may further comprise an interface unit 630.

By way of explanation, the receiving unit 610 is configured to receive an image of the subject, the image comprising a plurality of pixels having a DAX value and an attenuation value. Indeed, the receiving unit 610 may be configured to obtain a CT image of the subject. The image may be obtained from a database or be acquired directly from a phase-contrast X-ray imaging system.

Further, the pixel classification unit 620 is configured to calculate a ratio value based on the DAX value and the attenuation value of the pixel, for each of the pixels. The pixel classification unit 620 may then identify and classify atypical pixels. Specifically, the pixel classification unit 620 is configured to identify atypical pixels of the plurality of pixels based on the calculated ratio values for the plurality of pixels, and classify an atypical pixel based on the DAX value and the attenuation value of the atypical pixel.

Finally, as stated above, the system may further comprise an interface unit 630. In this case, each of the atypical pixels is classified by the pixel classification unit 620. The interface unit 630 may be configured to determine a number of atypical pixels belonging to each of a plurality of classes and communicate the number of atypical pixels belonging to each class to a user.

In this way, the system 600 may provide a means to assist a user in the diagnosis and quantification of disorders in a subject.

A single processor or other unit may fulfil the functions of several items recited in the claims.

The mere fact that certain measures are recited in mutually different dependent claims does not indicate that a combination of these measures cannot be used to advantage.

Any reference signs in the claims should not be construed as limiting the scope.

## Claims

1. A method (200) of analyzing a phase-contrast X-ray image of a subject, the method comprising:
receiving (202) an image of the subject, wherein the image comprises a plurality of pixels having a dark-field X-ray, DAX, value and an attenuation value;
for each of the plurality of pixels, calculating (204) a ratio value based on the DAX value and the attenuation value of the pixel;
identifying (206) atypical pixels of the plurality of pixels based on the calculated ratio values for the plurality of pixels; and
classifying (208) an atypical pixel based on the DAX value and the attenuation value of the atypical pixel.

2. The method of claim 1, wherein classifying the atypical pixel is based on a comparison of the DAX value of the atypical pixel with a first predetermined range, and a comparison of the attenuation value of the atypical pixel with a second predetermined range.

3. The method of claim 2, wherein the first predetermined range represents a range of typical DAX values, and the second predetermined range represents a range of typical attenuation values.

4. The method of claim 2 or 3, wherein the atypical pixel is classified into one of a plurality of classes.

5. The method of claim 4, further comprising:
classifying (408) each of the atypical pixels;
determining (410) a number of atypical pixels belonging to each class; and
communicating (412) the number of atypical pixels belonging to each class to a user.

6. The method of claim 4 or 5 wherein the image is an image of lung parenchyma of the subject, and wherein the plurality of classes comprising at least one of:
an impaired ventilation class;
a consolidation process class;
an alveolar destruction class;
an enhanced ventilation class;
a possible consolidation process class; and
a possible alveolar destruction class.

7. The method of claim 6, wherein classifying the atypical pixel comprises at least one of:
classifying the atypical pixel in the class of impaired ventilation (308) based on the DAX value being less than a lower-threshold of the first predetermined range, and the attenuation value being within the second predetermined range;
classifying the atypical pixel in the class of a consolidation process (306) based on the DAX value being less than the lower-threshold of the first predetermined range, and the attenuation value being greater than an upper-threshold of the second predetermined range;
classifying the atypical pixel in the class of alveolar destruction (304) based on the DAX value being less than the lower-threshold of the first predetermined range, and the attenuation value being less than a lower-threshold of the second predetermined range;
classifying the atypical pixel in the class of enhanced ventilation (310) based on the DAX value being greater than an upper-threshold of the first predetermined range, and the attenuation value being within the second predetermined range;
classifying the atypical pixel in the class of possible consolidation process (314) based on the DAX value being within the first predetermined range, and the attenuation value being greater than the upper-threshold of the second predetermined range; and
classifying the atypical pixel in the class of possible alveolar destruction (312) based on the DAX value being within the first predetermined range, and the attenuation value being less than the lower-threshold of the second predetermined range.

8. The method of any preceding claim, wherein for each of the plurality of pixels, calculating the ratio value is based on dividing the DAX value by the attenuation value of the pixel.

9. The method of any preceding claim, wherein identifying atypical pixels of the plurality of pixels is based on a comparison of the calculated ratio value of the pixel with a third predetermined range, wherein the third predetermined range represents a typical range of ratio values.

10. The method of claim 9, wherein an upper-threshold of the third predetermined range is based on the upper-threshold of the first predetermined range divided by the lower-threshold of the second predetermined range, and wherein a lower-threshold of the third predetermined range is based on the lower-threshold of the first predetermined range divided by the upper-threshold of the second predetermined range.

11. The method of any preceding claim, wherein receiving the image of the subject comprises:
receiving (502) a DAX image of the subject;
receiving (504) an attenuation image of the subject;
and
determining (506) the image of the subject based on the DAX image and the attenuation image.

12. The method of any preceding claim, wherein the plurality of pixels further have a phase-contrast value, and wherein classifying the atypical pixel is further based on the phase-contrast value of the atypical pixel.

13. The method of any preceding claim, wherein the DAX value of each pixel is a scattering coefficient, and the attenuation value of each pixel is a linear attenuation coefficient.

14. An apparatus (600) for analyzing a phase-contrast X-ray image of a subject, the apparatus comprising:
a receiving unit configured to receive an image of the subject (610), wherein the image comprises a plurality of pixels having a DAX value and an attenuation value; and
a pixel classification unit (620) configured to:
for each of the plurality of pixels, calculate a ratio value based on the DAX value and the attenuation value of the pixel;
identify atypical pixels of the plurality of pixels based on the calculated ratio values for the plurality of pixels; and
classify an atypical pixel based on the DAX value and the attenuation value of the atypical pixel.

15. A computer program element, which, when being executed by at least one processing unit, is adapted to cause the processing unit to perform the steps of the method as per any one of claims 1-13.
